# EUROPEAN PATENT APPLICATION

(11) **EP 1 405 748 A1**
(43) Date of publication of application: **07.04.2004**
(21) Application number: 03078056.3
(22) Date of filing: 26.09.2003
(51) Int. Cl.: B60J 11/00

(54) **Protective structure for vehicles**

(30) Priority: 01.10.2002 IT MI20022073; 07.11.2002 IT MI20022360
(71) Applicant: Confezioni Andrea S.r.l., 21100 Varese (IT)
(72) Inventor: Tavelli, Andrea, 21010 Montegrino Valtravaglia (Varese) (IT); Tavelli, Bruno, 21100 Varese (IT)
(74) Representative: Coppo, Alessandro

(57) **Abstract**

Protective structure for a vehicle, suitable for being withheld and blocked, by means of fixing elements, on said vehicle (2), so as to cover the bodywork, comprising a sheet (10) having an internal layer (11), in contact with said vehicle, made of a soft scratch-proof material, and an outer layer comprising an interlacing of yarns.

## Description

The present invention relates to a protective structure for vehicles, for example cars or motor vehicles.

At present, car manufacturers, sales agents and spare-part shops have various types of covers for vehicles, suitable for use as a protection from atmospheric events, vandalistic acts and accidental impact; these accessories protect the outer finishing and bodywork of the car when parked.

Similar covers are also normally used for preserving cars during their moving which is necessary for transporting them from the production factory to the final dealer.

Said transportation however, requires the use of articulated lorries, ferries and other means of transport and can require long times for the final delivery, depending on the distance between the production area and delivery site for the customer.

The use of traditional covers during the transportation of vehicles from the production factories to the purchasers creates a series of significant drawbacks.

The continuous removal and subsequent re-arrangement of the vehicle cover for any kind of mechanical necessity and/or moving cause the rapid deterioration of the structure with consequent production and running costs, which are preferably reduced.

Said removal and subsequent re-arrangement of the cover can also cause damage to the bodywork of the vehicle on which it is fitted. In particular, this problem can arise when the cover is particularly worn, for example when there are cracks and/or the detachment of parts of the cover.

An objective of the present invention is therefore to provide a protective structure for vehicles which overcomes the above disadvantages, or to indicate a highly reliable protective structure which is practical and easy to use.

Another objective of the present invention is to provide a protective structure for vehicles, which can be used several times and which, at the same time, maintains all the physico-structural characteristics and resistance and waterproofing properties of the traditional covers.

A further objective of the present invention is to provide a protective structure for vehicles which is sufficiently simple to use and economical, with respect to the known structures, due to the advantages conferred.

These objectives are achieved by a protective structure for vehicles suitable for being withheld and blocked, by means of fixing elements, on said vehicles, so as to cover the bodywork, characterized in that it comprises at least one sheet having an internal layer, in contact with said vehicle made of a soft scratchproof material, and an outer layer comprising an interlacing of yarns or bands.

Further objectives and advantages of the present invention will appear evident from the following description and enclosed drawings, provided for purely illustrative and non-limiting purposes, in which:
figure 1 represents a schematic side view of a motor vehicle to which the protective structure according to the present invention has been applied;
figure 2 is a section of a portion of the protective structure according to an embodiment of the present invention;
figure 3 is a view from above of a portion of the structure of figure 2;
figure 4 is a section of a portion of the protective structure according to another embodiment of the present invention;
figure 5 is a view from above of a portion of the structure of figure 4;
figure 6 is a view from above of a motor vehicle to which the cover structure according to a further embodiment of the present invention, has been applied;
figure 7 represents a blocking system to the vehicle of the cover according to an embodiment of the present invention;
figure 8 represents a blocking scheme to the vehicle of the cover according to another embodiment of the present invention;
figure 9 represents a further blocking system to the vehicle of the cover according to another embodiment of the present invention.

With reference to the above figures, the protective structure for vehicles is illustratively shown fitted on a motor vehicle 2.

Within the scope of the present invention, said structure can be applied to different types of vehicles, such as motor vehicles.

Said structure comprises a sheet 10 having an internal layer 11, preferably made of a soft scratchproof material (for example fabric, non-woven fabric, polyester, viscose and needled fabrics in general), and an outer layer comprising an interlacing of yarns or bands, in which the width of each band is greater than its thickness.

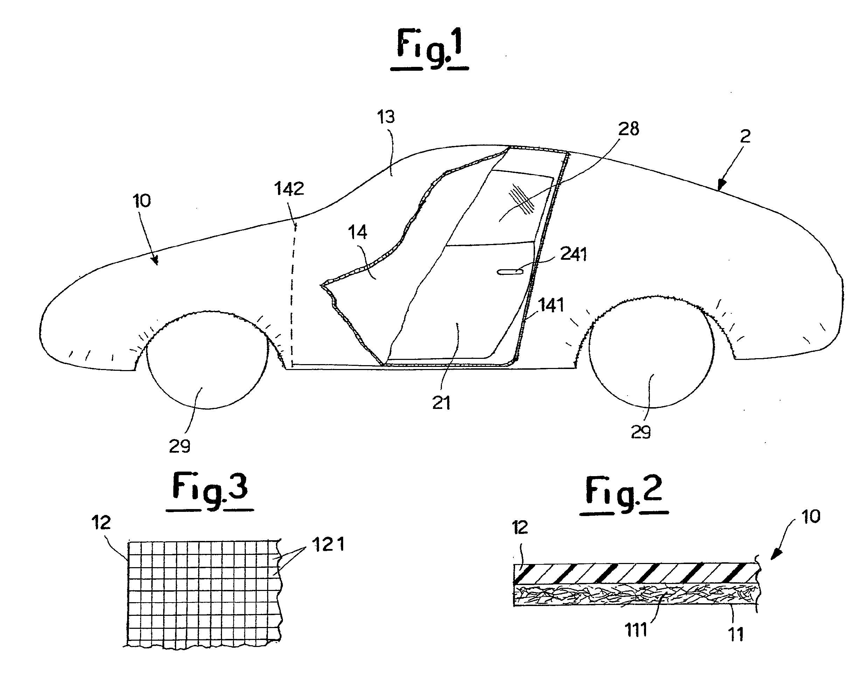

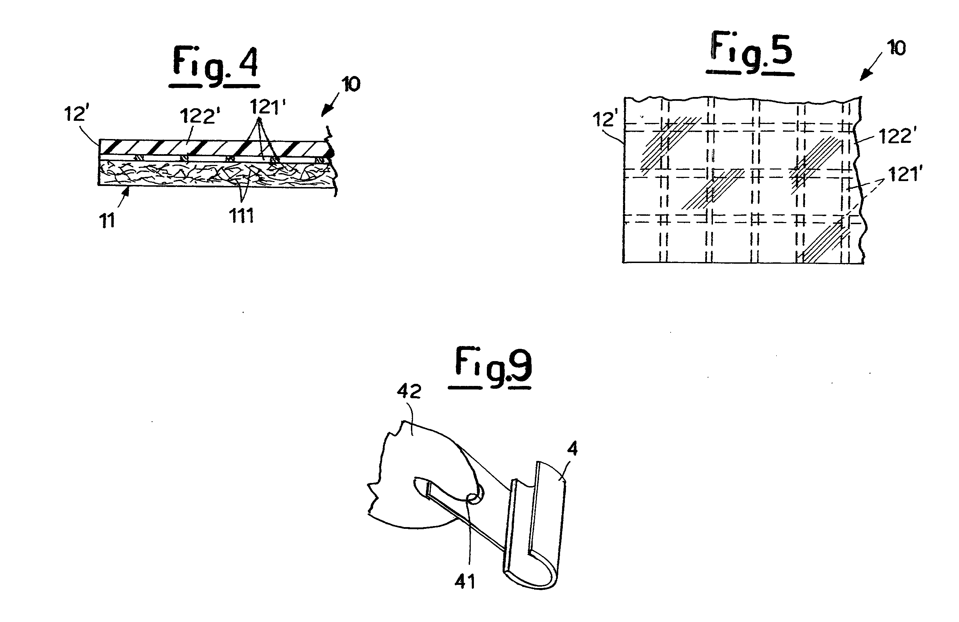

Said internal layer 11 comprises a down which is visible with the naked eye against the light. In particular, in figures 2 and 4 this down is visible and consists of a series of hairs 111, which are preferably at least a sixth of a millimeter long. Even more preferably, these hairs are at least a third of a millimeter long.

In the embodiment of figures 2 and 3, said outer layer 12 is made up, for example, of a fabric of interlaced bands or yarns, forming a flexible fabric. These bands or yarns can be made, for example, of polypropylene or polyester or in general polyamide or polyethylene or polythene.

The fabric is preferably produced by interlacing said bands or yarns at 90° between each other, as illustrated in figure 3, so that each piece of fabric appears as a layer consisting of a series of substantially square or rectangular portions 121. The bands or yarns can, in fact, have different dimensions forming rectangular portions also different from each other inside the sheet itself.

Alternatively, the fabric can be produced by interlacing said bands or yarns which are oblique with respect to each other, for example so as to form a series of rhombus-shaped portions.

In the embodiment of figures 4 and 5, said outer layer 12' preferably comprises a network 121', made up of an interlacing of yarns or bands, and lined with a protective layer 122' which is substantially waterproof.

These bands can be produced by welding or melting the threads of the bands to each other in the joining points of the network. The band is preferably made up of threads having a width greater than their thickness.

Said protective layer is made, for example, of polyethylene or polypropylene or PVC or a layer of NWF (Non-woven fabric). Furthermore, the protective layer can be melted on the network or equivalently glued to it with glues.

Said network 121' can be produced with a pre-selected mesh size and with a pre-selected distance between the meshes. The interlaced yarns which form the network can be welded to each other at each cross point or simply superimposed. The outer layer is made substantially waterproof by means of a polythening process, effected on the inner or outer layer of said network, or alternatively on both surfaces.

Furthermore, the yarns of the same network can differ from each other, within the range of material mentioned above, for example polypropylene in the weft and polyester in the warp.

Said outer lining proves to be extremely resistant to ultraviolet rays and is substantially waterproof.

Said outer layer and said inner layer are coupled with each other by the extrusion of a plastic material or by means of glues.

Furthermore, the type of material used as component of the outer layer, its weight and thickness, can vary according to the distance and length of the transportation of the vehicle; in any case, the covered vehicle can be transferred for various kilometers at a high speed and can also be loaded onto trains, ships and road-transporters.

According to the present invention, it is also possible to envisage a series of holes in certain areas of the sheet 10 for its specific functionality: for example, these holes can be arranged in correspondence with front air intakes of the motor vehicle, front or side grids, in order to favour the recirculation of air and relative cooling inside the engine; when the covered vehicle is a motor vehicle, there can be similar holes, for example on the side parts of the structure. These holes avoid condensation which can be formed on the surface of the vehicle covered by the sheet.

Said holes also allow the vehicle engine to be switched on, avoiding overheating of the engine itself. Said holes are appropriately covered by circular borders of the sheet to protect the vehicle from any possible penetration of water.

According to the present invention, in the embodiments illustrated which envisage the use of a sheet for a motor vehicle, the sheet 10 consists of a series of portions which can be partially removed from the motor vehicle 2 and situated in correspondence with specific portions of the vehicle, so as to facilitate the various movements to which it is subjected and allow easy accessibility to the mechanical components, during transportation, contemporaneously maintaining an adequate protective function.

When the protective structure is arranged on a motor vehicle, the necessity of having said removable portions is relatively less important. In any case, also in this embodiment of the present invention, it is possible to envisage the presence of removable portions of said sheet.

In particular, a first portion 13 of the sheet 10 can be contemplated, which can be at least partially lifted from the bodywork of the motor vehicle, in correspondence with the door 21 on the driver's side; this expedient allows access inside the vehicle when it is necessary to effect small maneuvers or movements during transportation for the delivery, without having to entirely remove the sheet 10 and consequently having to reposition it on the motor vehicle to protect it for the rest of the journey.

Further removable portions of the sheet 10 can be envisaged, preferably in correspondence with the bonnet 22 or hatchback 23, depending on the position of the engine in the car and/or in correspondence with the protective closing of the fuel tank tap.

These removable portions allow only one edge of the portions of sheet 10 to be lifted, in order to control possible breakdowns or malfunctioning, effect maintenance work or fill up the tank with fuel.

With respect to the portion 13 of the sheet 10 in correspondence with the door 21 of the driving side of the vehicle, in preferred but non-limiting embodiments, it is possible to open the portion 14 on the part of the handle 241, along the line indicated with 141 in figure 1, by putting a seam between the portion of sheet 14 and the adjacent portion along the side indicated with the dashed line 142 in figure 1; the edge 14 of sheet of the portion 13, after being opened along the sides, can be rolled up or folded back on the car roof.

As an alternative to this procedure, it is possible to use one or more suckers, to be positioned on the door 21, in order to block the edge of the sheet 10 and have free access to the inside of the vehicle.

Furthermore, it is possible to use the same method for gaining access to the inside of the front bonnet 22 or hatchback 23; in particular, it is possible to have a shaped portion of sheet 15 according to the geometry of the bonnet or hatchback of the vehicle, so that its opening can exactly follow the opening movement of the bonnet and hatchback, respectively.

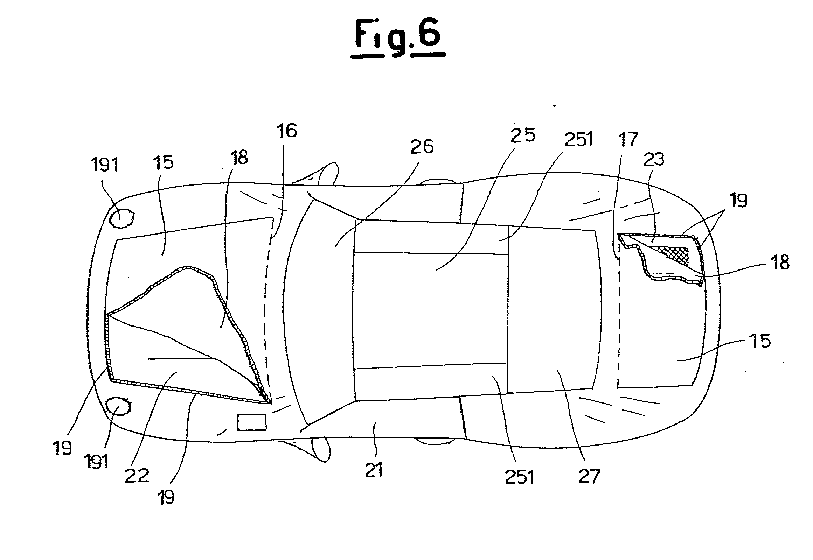

In this case, the stitching of the portion 15 to the adjacent portions of sheet 10 is effected in correspondence with the oscillating side of the bonnet or hatchback (in the case of figure 6, the seams are indicated with dashed lines and with references 16 and 17 respectively); also in this embodiment, it is possible to envisage, as an alternative, the application of one or more suckers on the chassis of the vehicle, whose function is to withhold an open edge 18 of the portion of sheet 15.

If the geometry of the vehicle is appropriate, the portions of sheet can be folded inside the cabin and/or engine compartment and held by hooks, magnets, suckers and other suitable blocking elements.

Furthermore, on the upper part of the protective structure, a panel 251, having varying dimensions and made of transpirant and impermeable material, can be assembled, in correspondence with the roof 25, on the right and left sides.

Finally, all the above openings can be closed by means of a zip 19, preferably made of nylon and suitably situated on the opening sides.

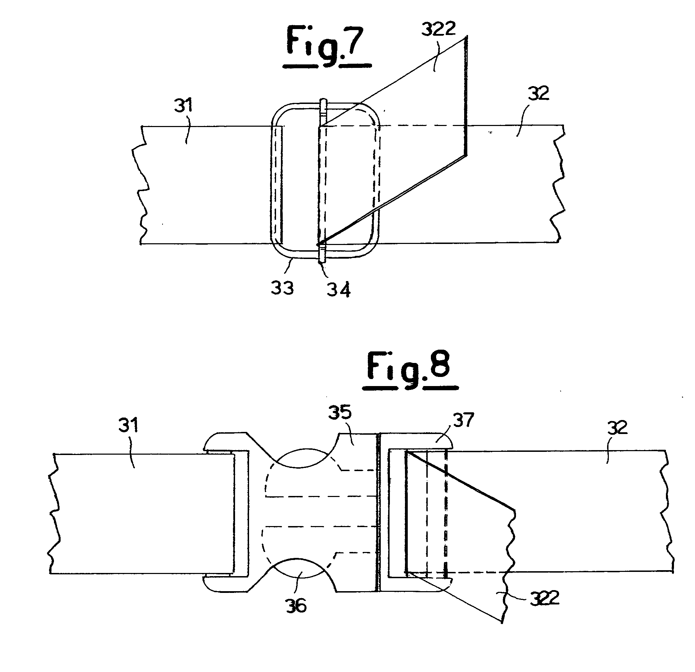

According to the present invention, the whole sheet 10 is fixed to the underneath of the car by means of a blocking system which comprises a series of tapes constrained to opposite sides of the sheet. Figures 7-8 represent examples of this blocking system comprising a pair of tapes 31 and 32 constrained at one of their ends to lower edges of said sheet and joined to the opposite ends by means of a blocking element.

This blocking element also allows the two tapes to be held in tension to allow the sheet to adhere to the vehicle and maintain the tension obtained, once the joining operation of the two tapes has been completed.

Figure 7 illustrates a first embodiment of said blocking element which integrates a tensioning element and a joining element of the tapes, comprising a substantially rectangular-shaped buckle 33 having a vertical central insert 34, which moves along opposite horizontal sides of said buckle.

Said buckle is preferably made of a metallic material, or alternatively of a plastic material.

Of said pair of tapes, the first 31 is permanently constrained to a vertical side of the buckle, and the second 32 can be removably fixed to the opposite vertical side and vertical central insert 34. When the sheet is open, the buckle remains fixed to said first tape, whereas for closing the sheet on the vehicle, the second tape is inserted in the buckle through said central insert.

In this way, by pulling the free edge 322 of the second tape, the tapes themselves are pulled, bringing the sheet in tension in contact with the vehicle. The second tape 32 is inserted so as to maintain a permanent tension generated by the pulling, allowing the sheet to remain firmly fitted over the vehicle.

Figure 8 illustrates a second embodiment of said blocking element, which has a joining element of the tapes and a separate tensioning element, and comprises a bayonet spring-clip consisting of a female housing 35 and a male coupling 36, which is inserted in said housing, associated with a buckle 37.

Said spring-clip and said buckle are preferably made of a plastic or, alternatively, metallic material.

Said female housing 35 has a hook in the rear part, for said first tape 31 and the buckle 37, preferably produced with said male coupling, is substantially similar to the buckle 33 of the previous embodiment. Said second portion of tape 32 is removably inserted in said buckle. In this embodiment, with the sheet open, the female housing 35 remains constrained to said first tape 31, and the male coupling and buckle remain constrained to said second tape 32.

In order to close the sheet over the vehicle, the spring-clip is closed by inserting the male coupling into the housing. Subsequently, by pulling the free edge 322 of the second tape, a traction is generated on the tapes themselves which bring the tensioned sheet in contact with the vehicle. The second tape 32 is inserted so as to maintain a permanent tension generated by the pulling, keeping the sheet firmly fitted over the vehicle.

Furthermore, the protective structure for vehicles according to the present invention comprises a series of hooks, fixed to said sheet by means of tapes, for example, suitable for attaching the sheet to protruding parts of the vehicle, such as protruding gutters, edges, profiles, etc...

When the vehicle has a gutter along the sides of the front windscreen, the internal profile of the hook preferably copies the outer profile of the windscreen gutter.

In particular, figure 9 illustrates a hook 4 equipped with slit 41, into which a tape 42, fixed to the sheet 10 in a suitable position, is inserted.

According to necessity, the sheet comprises openings situated in correspondence with the transparent parts of the vehicle from which light or visibility can enter/exit, for example in correspondence with the windscreen 26, the rear windows 27, side windows 28 or headlights of the vehicle. Along the edges of said openings there are terminal portions comprising a bi-adhesive tape. These terminal portions advantageously constrain the sheet onto the edges of the openings, sealing it on said edge, to prevent the penetration of water and humidity in general.

This expedient is extremely useful when the vehicle 11 must be moved under conditions of poor visibility or darkness, as light from the outside can enter inside the sheet or vice versa, through the openings.

In order to facilitate the moving of the vehicle as much as possible, the mudguards and wheels themselves of the vehicle, indicated with 29 in the figures, are left free, so that the profile of each mudguard can also act as a valid support for fixing the sheet 10, by means of the above-mentioned blocking systems.

For a correct fitting of the sheet 10 onto the car, each sheet is produced with specific geometric and structural characteristics for each type of vehicle; this prevents any type of vibration of the sheet and possible abrasions to the bodywork of the vehicle.

Similarly, in the embodiment of the present invention which envisages a structure which is suitable for protecting a motor vehicle, the sheet is produced with specific geometric and structural characteristics for each type of motor vehicle.

In this respect, all the seams effected on the sheet 10, can, for example, have an outer edge useful for protecting the bodywork from atmospheric agents and humidity or they can be English-style double seams using high resistance polyester yarn.

Again for the same purpose, a fabric tape is inserted inside the zip 19, in order to protect the car bodywork when moving the cursor and chain of the zip itself during the opening and closing of the desired portions of sheet 10.

Furthermore, said zips are preferably equipped with a closing device which can be activated with an appropriate key. In this respect, there are known zips which comprise a lock integrated in its cursor, which serves to block the sliding of the cursor.

The characteristics of the protective structure for vehicles, object of the present invention, appear evident from the description, as also its advantages.

Finally, numerous other variants can obviously be applied to the protective structure in question, without being excluded from the novelty principles inherent in the inventive concept. In the practical embodiment of the invention, the functions, materials, forms and dimensions of the details illustrated can also evidently vary according to the demands and can be substituted with other technically equivalent alternatives.

In particular, each sheet is produced with geometric and structural characteristics anatomically determined and specific for each brand and vehicle model.

According to the present invention, the sheet 10 can be packaged and/or folded inside a flexible container, for example made of a plastic material. The air contained inside the flexible container can be advantageously sucked out so as to obtain a reduction in the volume and a vacuum product which preserves the characteristics of the sheet over a period of time, at the same time reducing both storage space of the packaged sheets and also transportation costs. This is possible as the sheet of the present invention has the characteristic of being robust, preventing it from being damaged during the air suction phase.

## Claims

1. A protective structure for a vehicle, suitable for being withheld and blocked, by means of fixing elements, on said vehicle (2), so as to cover the bodywork, **characterized in that** it comprises a sheet (10) including an internal layer (11), in contact with said vehicle, made of a soft scratch-proof material, and an outer layer comprising an interlacing of yarns or bands.

2. The protective structure according to claim 1, wherein said outer layer (11) is made of a fabric of yarns or bands interlaced with each other to form a flexible fabric.

3. The protective structure according to claim 2, wherein said fabric is produced by interlacing said bands or yarns at substantially 90° between each other.

4. The protective structure according to claim 2, wherein said fabric is produced by interlacing said bands or yarns obliquely between each other.

5. The protective structure according to claim 2, wherein said bands or yarns are made of polyester or polypropylene or polyamide or polyethylene or polythene.

6. The protective structure according to claim 1, wherein said outer layer comprises a network associated with a layer of waterproof lining.

7. The protective structure according to claim 6, wherein said network is produced by means of an interlacing of yarns or bands.

8. The protective structure according to claim 6, wherein said waterproof lining is a layer of polyethylene or polypropylene or PVC or NWF.

9. The protective structure according to claim 6, wherein said yarns or bands or made of polyester and/or polypropylene and/or polyamide and/or polyethylene and/or polythene.

10. The protective structure according to claim 1, wherein said outer layer and said internal layer are coupled with each other by the extrusion of plastic material or by suitable glues.

11. The protective structure according to claim 1, **characterized in that** said internal layer comprises a down made up of a series of hairs (111).

12. The protective structure according to claim 11, **characterized in that** said hairs (111) are at least a sixth of a millimeter long.

13. The protective structure according to claim 1, **characterized in that** said sheet (10) is fixed underneath said vehicle, by means of a blocking system comprising one or more tapes (31) and (32) constrained at one of their ends to lower edges of said sheet and joined to the opposite ends by means of a blocking element.

14. The protective structure according to claim 13, **characterized in that** said blocking element comprises a buckle (33) having a vertical central insert (34), fixed or moveable along opposite horizontal sides of said buckle.

15. The protective structure according to claim 13, **characterized in that** said blocking element comprises a bayonet spring-clip consisting of a female housing (35) and a male coupling (36), which is inserted in said housing, associated with a buckle (37).

16. The protective structure according to claim 1, **characterized in that** said sheet comprises openings situated in correspondence with the transparent parts of the vehicle, from which light or visibility can enter, terminal portions comprising a bi-adhesive tape being arranged along the borders of said openings.

17. The protective structure according to claim 1, **characterized in that** each sheet is produced with geometric and structural characteristics anatomically determined and specific for each vehicle brand and model.

18. The protective structure according to claim 1, **characterized in that** said sheet comprises openings situated in correspondence with the transparent parts of the vehicle, from which light or visibility can enter, terminal portions comprising a bi-adhesive tape internally fixed to said sheet, being arranged along the borders of said openings.

19. The protective structure according to claim 1, **characterized in that** said sheet comprises a series of hooks (4), to each of which a tape (42) is fixed, attached to the sheet in a suitable position, said hooks being suitable for being inserted in a side gutter of the windscreen of said vehicle.

20. The protective structure according to claim 1, wherein said sheet is kept inside a flexible container from which the air is sucked to form a vacuum product.
